# EUROPÄISCHE PATENTANMELDUNG

(11) **EP 2 208 478 A1**
(43) Veröffentlichungstag der Anmeldung: **21.07.2010**
(21) Anmeldenummer: 10000301.1
(22) Anmeldetag: 14.01.2010
(51) Int. Cl.: A61C 9/00

(54) **Retraktionshilfe für den zahnärztlichen Gebrauch und Verwendung einer solchen Retraktionshilfe**

(30) Priorität: 14.01.2009 DE 102009004978
(71) Anmelder: Schepperheyn, Hans-Peter, 75203 Königsbach-Stein (DE); Schepperheyn, Sibylle, 75203 Königsbach-Stein (DE)
(72) Erfinder: Schepperheyn, Hans-Peter, 75203 Königsbach-Stein (DE); Schepperheyn, Sibylle, 75203 Königsbach-Stein (DE)
(74) Vertreter: Schön, Thilo

(57) **Zusammenfassung**

Es wird eine Retraktionshilfe für den zahnärztlichen Gebrauch vorgeschlagen. Die Retraktionshilfe besteht aus einem saugfähigen Material und ist für die Verwendung bei der Vorbereitung des Sulcusbereiches vor der Abdrucknahme vorgesehen. Um eine einfache und rasche Handhabung, ein großes Aufnahmevermögen für Flüssigkeiten und eine gute Lagestabilität zu erreichen, ist die Retraktionshitfe als Abschnitt eines Textilschlauches aus saugfähigen Fasern hergestellt, der sowohl eine Elastizität in Radialrichtung als auch eine Dehnbarkeit und/oder Verformbarkeit in Axialrichtung aufweist und dessen Innendurchmesser im kräftefreien Zustand zwischen 3 und 10 mm beträgt (Fig. 1).

## Beschreibung

Die vorliegende Erfindung betrifft eine Retraktionshilfe, wie sie in der Zahnmedizin für den Gingiva-Sulcus eingesetzt wird, nach dem Oberbegriff des Anspruchs 1 sowie eine Verwendung einer solchen Retraktionshilfe nach Anspruch 5.

In der Zahnmedizin ist es im Allgemeinen erforderlich, bei einer prothetischen beziehungsweise teilprothetischen Zahnbehandlung, wie der Fertigung einer Krone oder Brücke, zur Formung der (Teil-)Prothese einen Abdruck zu nehmen, der auch vom Zahnstumpf innerhalb der Gingiva-Sulcustasche genommen werden muss. Hierbei tritt ein Problem auf, da dann zur Anfertigung eines genauen Abdrucks des Zahnstumpfes im Sulcusbereich das Zahnfleisch zurückgedrängt werden und zudem der Zahnstumpf auch im Sulcusbereich frei von auftretenden Flüssigkeiten, wie zum Beispiel Blut und Sulcusfluid, sein muss.

Zu diesem Zweck wird meist ein sogenannter Retraktionsfaden in die taschenförmige Vertiefung (Sulcus) zwischen Gingiva und Zahn eingelegt, durch welchen das Zahnfleisch mechanisch zurückgedrängt werden soll. Durch den Retraktionsfaden sollen auch Flüssigkeiten, wie Blut oder Sulcusfluid, aufgenommen werden, um eine genaue Abdrucknahme auch durch "Trockenhaltung" des Zahns zu ermöglichen. Der Retraktionsfaden wird zum Zwecke der Blutstillung zudem teilweise auch mit adstringierenden beziehungsweise hämostatischen Wirkstoffen getränkt, welche an das Zahnfleisch abgegeben werden und dort ihre hämostatische Wirkung entfalten. Ein solcher Retraktionsfaden ist in der gattungsbildenden DE 102004032099 A1 beschrieben.

Nachteilig an der Verwendung eines solchen Retraktionsfadens ist zum einen, dass die Handhabung und genaue Positionierung des Retraktionsfadens relativ zeitaufwendig ist und dass der Retraktionsfaden auf Grund seines geringen Durchmessers von etwa 1 mm nur eine relativ kleine Menge Flüssigkeit aufnehmen kann.

Ein weiterer Nachteil ist, dass in manchen Fällen der Retraktionsfaden während der Verweil-/Einwirkdauer (etwa 5 Minuten) nicht im Sulcus verbleibt und dann ein neuer Retraktionsfaden gelegt werden muss.

Aus der DE 10 2005 008 355 A1 ist eine Kompressionskappe bekannt, die den Einsatz eines Retraktionsfadens entbehrlich macht. Diese Kompressionskappe ist in ihrem Aufbau und in ihrer Handhabung jedoch recht kompliziert.

Aus der gattungsbildenden G 92 11 339.7 ist ein Retraktionsring bekannt. Hier wird unter anderem vorgeschlagen, einen Rand des Ringes vorgefertigt gebogen auszuführen, so dass er dem Zahnfleischrandverlauf folgen soll. Da jedoch jeder Zahnfleischveriauf anders ist, folgt der Rand des Ringes dem Zahnfleischverlauf oft nur in unbefriedigender Weise.

Ähnliches schlägt die DE 29 19 613 C2 vor. Hier ist eine starre, ringförmige Retraktionsmanschette beschrieben, welche dem physiologischen Sulcusverlauf nachgebildet ist.

Die PA 05 555 80 zeigt eine ringförmige Retraktionshilfe, welche aus Wildleder oder Zunder ausgestanzt ist.

Die DE 299 12 502 U1 schlägt einen Retraktionsfaden mit dreieckigem Querschnitt vor.

Hiervon ausgehend stellt sich die vorliegende Erfindung die Aufgabe, eine gattungsgemäße Retraktionshilfe dahingehend weiterzubilden, dass sie einfach in der Handhabung und der Herstellung ist und gute Retraktionsergebnisse zeigt.

Diese Aufgabe wird durch eine Retraktionshilfe mit den Merkmalen des Anspruchs 1 gelöst.

Erfindungsgemäß ist die Retraktionshilfe in Form eines Abschnitts eines Textilschlauches ausgebildet. Dieser Textilschlauch ist vorzugsweise als Endlosschlauch, insbesondere als endlos hergestellter Rundstrickschlauch ausgebildet. Ein solcher Textilschlauch weist sowohl eine elastische Dehnbarkeit (Elastizität) in Radialrichtung als auch eine Dehnbarkeit und/oder Verformbarkeit in Axialrichtung auf. Die Anpassung der schlauchförmigen Retraktionshilfe an den Sulcussaum ist möglich, weil sich die textile Retraktionshilfe verformen und/oder dehnen lässt. Zwischen den Fäden des Textils entstehen Hohlräume und die Fäden selbst sind nicht starr fixiert. Auf diese Weise ist eine Verformung und/oder Dehnung in axialer Richtung möglich. Der Innendurchmesser des von äußeren Kräften freien Schlauches ist hierbei so gewählt, dass er kleiner als der Außendurchmesser des kleinsten zu behandelnden Zahnstumpfes ist. Der Durchmesser orientiert sich an den gängigen Durchmessern für provisorische Zähne. Um alle in der Praxis vorkommenden Größen und Formen von Zahnstümpfen abdecken zu können, ist es ausreichend, wenn der Zahnarzt eine erfindungsgemäße Retraktionshilfe mit maximal zwei Innendurchmessern vorhält.

Durch die Dehnbarkeit/Verformbarkeit in Axialrichtung trägt die Retraktionshilfe den unterschiedlich bogenverlaufenden Sulcussäumen Rechnung. Durch die gleichzeitige elastische Dehnbarkeit in Radialrichtung werden die verschiedenen Durchmesser der Zahnstümpfe und damit die verschiedenen Durchmesser der Sulcussäume zu berücksichtigt. Durch diese beiden Effekte ergibt sich ein sehr guter Sitz am Zahnstumpf und eine gute Anlage am Sulcus.

Weiterhin weißt die erfindungsgemäße Retraktionshilfe gegenüber einem Retraktionsfaden ein größeres Aufnahmevolumen und damit ein größeres Aufnahmevermögen für Flüssigkeiten auf.

Schließlich hat die erfindungsgemäße Retraktionshilfe eine sehr gute Lagestabilität.

Die Schläuche für die Retraktionshilfen werden vorzugsweise als Endlosschläuche hergestellt. Diese können in Stücken von beispielsweise einem Meter Länge ausgeliefert werden. Der Zahnarzt schneidet dann vor der Behandlung ein passendes Stück, beispielsweise mit einer Länge von 5 mm ab. Es ist aber auch möglich, dass die Endlosschläuche bereits herstellerseitig in Abschnitte zerteilt werden und diese Abschnitte an die Endverbraucher, also die Zahnärzte, geliefert werden.

Geeignete Materialien für die Herstellung eines solchen Schlauches sind beispielsweise Gestricke auf der Basis von saugfähigen Fasern. Diese können zum Beispiel synthetischen oder natürlichen Ursprungs sein. Die bevorzugte Herstellungsmethode ist Rundstricken. Durch das Stricken kann eine bevorzugte elastische Dehnbarkeit in Radialrichtung um wenigstens 50 %, weiter vorzugsweise um wenigstens 100 % erreicht werden.

Der bevorzugte Innendurchmesser der schlauchförmigen Retraktionshilfe liegt zwischen 3 und 15 mm, insbesondere zwischen 3 und 10 mm.

Die Erfindung wird nun anhand eines Ausführungsbeispiels mit Bezug auf die Figuren näher beschrieben. Hierbei zeigen:
- Figur 1:: eine schematische Darstellung eines Zahnstumpfes und einer Retraktionshilfe,
- Figur 2:: das in Figur 1 Gezeigte nach Anordnen der Retraktionshiife auf dem Zahnstumpf und
- Figur 3:: einen Schnitt entlang der Ebene A-A in Figur 2.

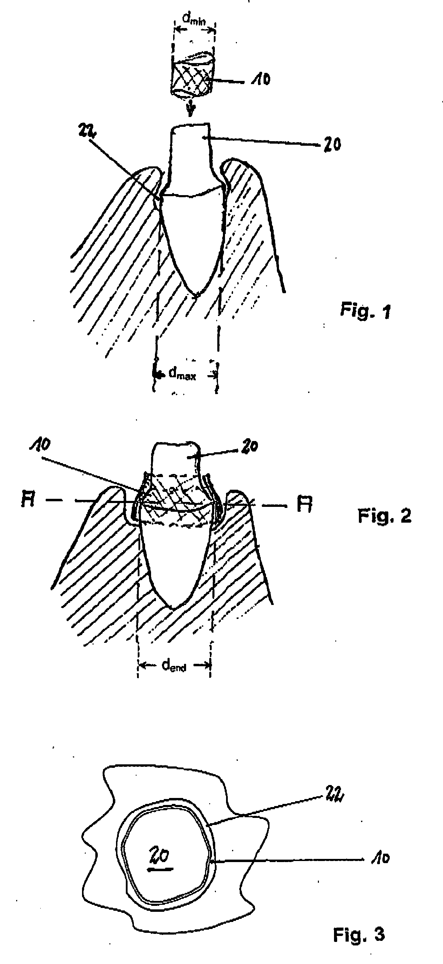

Die Figur 1 zeigt schematisch eine Seitenansicht eines Zahnstumpfes 20 und einer schlauchförmigen Retraktionshilfe 10, bevor diese auf den Zahnstumpf 20 aufgeschoben wird. Die Retraktionshilfe 10 ist ein Abschnitt eines im Endlos-Verfahren gestrickten Schlauches. Vor der Anwendung schneidet der behandelnde Zahnarzt ein in der Länge passendes Stück eines in größerer Länge gelieferten Schlauches ab und streift diesen Abschnitt über den Zahnstumpf, an welchem ein Abdruck abgenommen werden soll. Dieser Schlauchabschnitt, also die Retraktionshilfe, kann mit einem blutstillenden Mittel getränkt werden.

Die so vorbereitete Retraktionshilfe wird nun über den Zahnstumpf bis in die Zahnfleischtasche 22 (Fig. 2) geschoben, wobei darauf zu achten ist, dass der Minimaldurchmesser dₘᵢₙ der schlauchförmigen Retraktionshilfe - das ist der Durchmesser welchen die Retraktionshilfe im kräftefreien Zustand aufweist - kleiner ist als der Außendurchmesser d_{end} des Zahnstumpfes an der Stelle, an welcher die Retraktionshilfe zu liegen kommt. Aufgrund der radialen Elastizität und der axialen Dehnbarkeit/Verformbarkeit ist sichergestellt, dass die Retraktionshilfe am Anwendungsort sowohl eng am Zahnstumpf als auch eng am Suicussaum anliegt (Fig. 3).

Alternativ zum oben Beschriebenen wäre es auch möglich, die schlauch- oder ringförmigen Retraktionshilfen als einzelne Elemente herzustellen.

Im Vorangegangenen wurde die erfindungsgemäße Retraktionshilfe zumeist als "Schlauch" bezeichnet. Aufgrund der meist recht geringen Länge, könnte man auch den Begriff "Ring" wählen.

### Bezugszeichenliste

- 10: Retraktionshilfe
- 20: Zahnstumpf
- 22: Zahnfleischtasche
- dₘᵢₙ: minimaler Innendurchmesser der Retraktionshilfe
- dₘₑₓ: maximaler Außendurchmesser des Zahnstumpfes
- d_{end}: Innendurchmesser der Retraktionshilfe im angewandten Zustand

## Patentansprüche

1. Retraktionshilfe für den zahnärztlichen Gebrauch, welche aus einem saugfähigen Material besteht, wobei die Retraktionshilfe ein wenigstens in Radialrichtung elastisch dehnbarer Schlauch ist, dessen innendurchmesser im kräftefreien Zustand zwischen 3 und 15 mm beträgt,
**dadurch gekennzeichnet, dass** der Schlauch ein Abschnitt eines Textilschlauches ist.

2. Retraktionshilfe nach Anspruch 1, **dadurch gekennzeichnet, dass** der Textilschlauch ein endlos hergestellter Rundstrickschlauch ist.

3. Retraktionshilfe nach Anspruch 1, **dadurch gekennzeichnet, dass** die elastische Dehnbarkeit in Radialrichtung wenigstens 20% beträgt.

4. Retraktionshilfe nach einem der vorangehenden Ansprüche, **dadurch gekennzeichnet, dass** der Abschnitt bereits vorgefertigt ist.

5. Verwendung einer Retraktionshilfe nach einem der vorangehenden Ansprüche für den Gingivasulcus.
